(19) Europäisches Patentamt
European Patent Office
Office européen des brevets

(11) Publication number: 0 219 958 B1

# (12) EUROPEAN PATENT SPECIFICATION

(45) Date of publication of patent specification: 19.12.90

(51) Int. Cl.$^5$: C 09 K 19/20, C 09 K 19/46, G 02 F 1/133

(21) Application number: 86306890.4

(22) Date of filing: 05.09.86

(15) Please take over the paragrah indicated with.

## (54) Ferroelectric liquid crystal ester compound and liquid crystal composition.

(30) Priority: 18.09.85 JP 206089/85

(43) Date of publication of application: 29.04.87 Bulletin 87/18

(45) Publication of the grant of the patent: 19.12.90 Bulletin 90/51

(84) Designated Contracting States: CH DE FR GB LI

(56) References cited:
EP-A-0 115 693
EP-A-0 136 845
AT-B- 350 122
DE-A-2 848 421
US-A-4 341 653

(73) Proprietor: Chisso Corporation
6-32, Nakanoshima 3-chome Kita-ku
Osaka-shi Osaka-fu (JP)

(72) Inventor: Inoue, Hiromichi
10-2, Otsutomocho Kanazawaku
Yokohamashi Kanagawaken (JP)
Inventor: Inukai, Takashi
4-46, Mori 3-chome Isogoku
Yokohamashi Kanagawaken (JP)
Inventor: Saito, Shinichi
10-1, Otsutomocho Kanazawaku
Yokohamashi Kanagawaken (JP)
Inventor: Miyazawa, Kazutoshi
12-14, Mutsuura 2-chome Kanazawaku
Yokohamashi Kanagawaken (JP)
Inventor: Terashima, Kanetsugu
19-21, Yanagicho Kanazawaku
Yokohamashi Kanagawaken (JP)

(74) Representative: Ruffles, Graham Keith et al
MARKS & CLERK 57-60 Lincoln's Inn Fields
London WC2A 3LS (GB)

The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 219 958 B1

Courier Press, Leamington Spa, England.

## Description

Background of the Invention

1. Field of the Invention

This invention relates to a novel liquid crystal compound and a liquid crystal composition containing the same. More particularly it relates to a chiral liquid crystal compound having an optically active group and a chiral liquid crystal composition containing the same.

2. Description of the Related Art

As liquid crystal display elements, those of TN (Twisted Nematic) type display mode have currently been most broadly used, but they have been inferior to emissive type display elements (such as those of electroluminescence, plasma display, etc.) in the aspect of response speed. Thus, various improvements in this respect have been attempted, but it does not appear that possibility of the improvement to a large extent has been left behind so much. Accordingly, various liquid crystal display devices based on other principles in place of TN type display elements have been attempted, and as one of such devices, there is a display mode utilizing ferroelectric liquid crystals (N. A. Clark et al, Applied Phys. Letter, *36,* 899 (1980)). The mode utilizes the chiral smectic C phase (hereinafter abbreviated to SC* phase) or chiral smectic H phase (hereinafter abbreviated to SH* phase) of ferroelectric liquid crystals, and those having these phases in the vicinity of room temperature are preferred.

Some liquid crystal compounds exhibiting chiral smectic phases have already been known for example, those disclosed in Japanese patent application laid-open No. Sho 53—d22883 (G.B. 1,592,161) and expressed by the formula

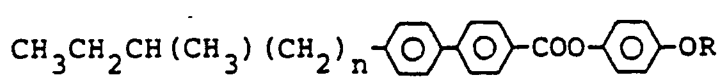

wherein n represents 1, 2 or 3 and R represents a linear chain or branched alkyl group which may contain a chiral center, and those of carbonic acid esters disclosed in Japanese patent application laid-open No. Sho 60—54341/1985 (EP 136,845) and expressed by the formula

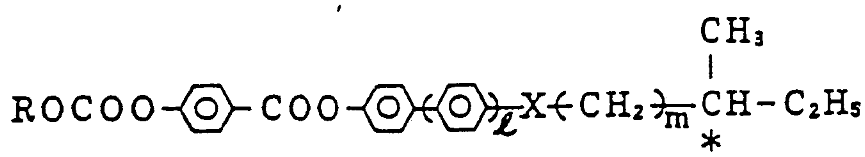

wherein R represents a linear chain or branched alkyl group of 1 to 18 carbon atoms; l represents 0 or 1; m represents 1 when l = 0, and represents 1 or 2 when l = 1; X represents COO or —O— when m = 1 and represents a single bond when m = 2; and * represents an optically active carbon, but there still has been no compound exhibiting satisfactory properties.

Summary of the Invention

Mainly in order to develop a smectic liquid crystal substance which is suitable for being applied to the above display elements and has superior properties, the present inventors have made extensive search for various liquid crystal compounds having an optically active group, and have attained the present invention.

The present invention resides in a ferroelectric liquid crystal compound expressed by the formula

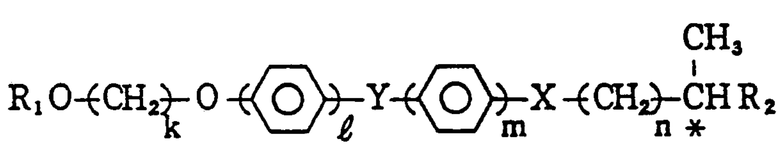

(I)

wherein $R_1$ represents an alkyl group of 2 to 6 carbon atoms; $R_2$, an alkyl group of 2 to 6 carbon atoms; X, a single bond, —O— or —COO—; Y, —COO— or —OCO—; k, 2 or 3; l and m, each 1 or 2; n, an integer of 0 to 5; and C having a symbol * attached thereto, unsymmetrical carbon atom, respectively, and a liquid crystal composition containing the same.

Detailed Description of Preferred Embodiments

The phase transition points of representative compounds amoung those of the formula (I) are shown in Table 1. Further the spontaneous polarization values of a portion of the above compounds are also shown in Table 1.

TABLE 1

| Sample No. | In formula (I) | | | | | | | | Phase transition point (°C) | | | | | | | $Ps^{*1)}$ nC/cm² |
|---|---|---|---|---|---|---|---|---|---|---|---|---|---|---|---|---|
| | $R_1$ | k | l | Y | m | X | n | $R_2$ | C | $S_E$ | $S_B$ | $S_C^*$ | $S_A$ | $C_h$ | I | |
| 1 | $C_2H_5$ | 2 | 1 | —COO— | 1 | Single bond | 1 | $C_2H_5$ | · 46.8 | — | — | — | — | — | · | |
| 2 | $C_2H_5$ | 2 | 1 | —COO— | 1 | —O— | 1 | $C_2H_5$ | · 43.8 | — | — | — | — | — | · | |
| 3 | $C_2H_5$ | 2 | 1 | —COO— | 1 | —O— | 3 | $C_2H_5$ | · 41.5 | — | — | — | — | — | · | |
| 4 | $C_2H_5$ | 2 | 1 | —COO— | 1 | —O— | 5 | $C_2H_5$ | · 48.2 | — | — | — | — | — | · | |
| 5 | $C_2H_5$ | 2 | 1 | —COO— | 1 | —COO— | 1 | $C_2H_5$ | · 33.5 | — | — | — | — | — | · | |
| 6 | $C_2H_5$ | 2 | 1 | —COO— | 2 | —O— | 1 | $C_2H_5$ | · 103.6 | — | — | ( · 99.3) | — | · 162.0 | · | |
| 7 | $C_2H_5$ | 2 | 1 | —COO— | 2 | —COO— | 1 | $C_2H_5$ | · 76.0 | — | — | · 93.4 | · 124.9 | · 151.7 | · | 1.4 |
| 8 | $C_2H_5$ | 2 | 2 | —COO— | 1 | Single bond | 1 | $C_2H_5$ | · 103.9 | — | — | · 100.0) | · 139.5 | · 159.9 | · | 2.4 |
| 9 | $C_2H_5$ | 2 | 2 | —COO— | 1 | —O— | 1 | $C_2H_5$ | · 120.2 | — | — | ( · 1125.1) | · 169.1 | · 171.9 | · | |
| 10 | $C_2H_5$ | 2 | 2 | —COO— | 1 | —O— | 3 | $C_2H_5$ | · 131.7 | — | — | ( · 129.8) | · 172.5 | · 179.4 | · | |
| 11 | $C_2H_5$ | 2 | 2 | —COO— | 1 | —COO— | 1 | $C_2H_5$ | · 102.4 | · 85.4 | — | — | · 176.4 | — | · | |
| 12 | $C_2H_5$ | 2 | 2 | —COO— | 2 | —O— | 1 | $C_2H_5$ | · 168.2 | — | — | · 223.0 | — | · 295 or more | · | |
| 13 | $C_2H_5$ | 2 | 2 | —COO— | 2 | —COO— | 1 | $C_2H_5$ | · 132.6 | — | ( · 127.0) | — | · 2830.0 | · 296 or more | · | |
| 14 | $C_2H_5$ | 3 | 1 | —COO— | 2 | —O— | 1 | $C_2H_5$ | · 97.0 | — | — | ( · 90.3) | — | · 151.7 | · | 4.7 |
| 15 | $C_2H_5$ | 3 | 1 | —COO— | 2 | —COO— | 1 | $C_2H_5$ | · 85.1 | — | — | ( · 67.5) | · 125.0 | · 139.5 | · | 4.7 |
| 16 | $C_2H_5$ | 3 | 2 | —COO— | 1 | —O— | 1 | $C_2H_5$ | · 125.7 | — | — | — | · 181.0 | — | · | |
| 17 | $C_2H_7$ | 2 | 1 | —OCO— | 2 | —O— | 3 | $C_2H_5$ | · 13.5 | — | — | · 18.0 | — | · 27.0 | · | |
| 18 | $C_3H_7$ | 2 | 2 | —COO— | 1 | Single bond | 1 | $C_2H_5$ | · 75.8 | — | — | · 115.8 | · 132.2 | · 149.8 | · | 3.5 |
| 19 | $C_3H_7$ | 2 | 2 | —COO— | 1 | —O— | 1 | $C_2H_5$ | · 113.7 | — | — | · 142.2 | · 161.2 | · 163.1 | · | |

TABLE 1 (continued)

| Sample No. | In formula (I) | | | | | | | | Phase transition point (°C) | | | | | | | Ps*1) nC/cm² |
|---|---|---|---|---|---|---|---|---|---|---|---|---|---|---|---|---|
| | $R_1$ | k | l | Y | m | X | n | $R_2$ | C | $S_E$ | $S_B$ | $S_C*$ | $S_A$ | $C_h$ | I | |
| 20 | $C_3H_7$ | 2 | 2 | —COO— | 1 | —O— | 5 | $C_2H_5$ | · 115.5 | — | — | · 141.6 | · 168.6 | · 169.6 | · | |
| 21 | $C_3H_7$ | 2 | 2 | —COO— | 1 | —COO— | 1 | $C_2H_5$ | · 81.6 | (· 62.4) | — | · 84.6 | · 165.6 | — | · | 0.5 |
| 22 | $C_3H_7$ | 2 | 2 | —COO— | 2 | —O— | 1 | $C_2H_5$ | · 158.8 | — | — | · 223.6 | — | · 286.8 | · | |
| 23 | $C_5H_{11}$ | 2 | 1 | —COO— | 1 | —O— | 3 | $C_2H_5$ | · 260 | — | — | (· 25.0) | — | — | · | |
| 24 | $C_5H_{11}$ | 2 | 1 | —COO— | 1 | —O— | 5 | $C_2H_5$ | · 39.5 | — | — | (· 37.3) | — | — | · | |
| 25 | $C_5H_{11}$ | 2 | 1 | —COO— | 2 | —COO— | 1 | $C_2H_5$ | · 75.1 | — | — | · 108.0 | · 119.3 | · 131.3 | · | 1.9 |
| 26 | $C_6H_{13}$ | 2 | 1 | —OCO— | 1 | —O— | 3 | $C_2H_5$ | · 21.8 | — | — | · 22.3 | — | · 23.4 | · | |
| 27 | $C_6H_{13}$ | 2 | 1 | —COO— | 1 | —O— | 3 | $C_2H_5$ | · 26.0 | — | — | (· 25.0) | — | — | · | |
| 28 | $C_6H_{13}$ | 2 | 2 | —COO— | 1 | Single bond | 1 | $C_2H_5$ | · 70.9 | — | — | · 118.8 | · 126.7 | · 132.3 | · | 2.6 |
| 29 | $C_6H_{13}$ | 2 | ½ | —COO— | 1 | —COO— | 1 | $C_2H_5$ | · 63.8 | — | — | · 113.2 | · 148.9 | — | · | |
| 30 | $C_2H_5$ | 2 | 1 | —COO— | 2 | —O— | 0 | $C_6H_{13}$ | · 68.8 | — | — | (· 54.5) | — | · 101.5 | · | |
| 31 | $C_2H_5$ | 2 | 1 | —COO— | 2 | —COO— | 0 | $C_6H_{13}$ | · 70.8 | — | — | (· 39.5) | · 102.4 | — | | 160.5 |
| 32 | $C_2H_5$ | 2 | 2 | —COO— | 1 | —O— | 0 | $C_6H_{13}$ | · 100.4 | (· 84.5) | — | — | · 137.7 | — | · | |
| 33 | $C_2H_5$ | 2 | 2 | —COO— | 1 | —COO— | 0 | $C_6H_{13}$ | · 100.5 | (· 89.8) | — | — | · 147.0 | — | · | |
| 34 | $C_2H_5$ | 3 | 2 | —COO— | 1 | —O— | 0 | $C_6H_{13}$ | · 116.0 | — | — | — | · 133.0 | — | · | |
| 35 | $C_3H_7$ | 2 | 2 | —COO— | 1 | —O— | 0 | $C_6H_{13}$ | · 94.5 | (· 61.0) | — | (· 85.2) | · 125.4 | — | · | 79.3 |
| 36 | $C_3H_7$ | 2 | 2 | —COO— | 1 | —COO— | 0 | $C_6H_{13}$ | 83.6 | (· 64.9) | | — | — | · 1315 | · | |
| 37 | $C_5H_{11}$ | 2 | 1 | —COO— | 2 | —COO— | 0 | $C_6H_{13}$ | · 83.7 | — | — | (· 76.7) | · 86.7 | — | · | 174.6 |
| 38 | $C_6H_{13}$ | 2 | 2 | —COO— | 1 | —O— | 0 | $C_6H_{13}$ | · 85.9 | — | — | · 107.2 | · 110.6 | — | · | |
| 39 | $C_5H_{11}$ | 2 | 1 | —COO— | 1 | —O— | 4 | $C_2H_5$ | · 23.0 | — | — | · 26.1 | — | · 27.2 | · | |
| 40 | $C_6H_{13}$ | 2 | 1 | —OCO— | 1 | —O— | 5 | $C_2H_5$ | · 30.0 | — | — | · 37.5 | — | — | · | |

*1) Values measured at a temperature lower by 10°C than the upper limit temperature of SC* phase

Most of the compounds of the formula (I) exhibit SC* phase suitable to display modes utilizing ferroelectric properties. Further, some of the compounds have a much larger spontaneous polarization value Ps in SC* phase than those of so far known compounds of this kind, and when such compounds are used, it is possible to drive display elements utilizing ferroelectric properties under low voltages. Fo example, one of the compounds disclosed in the above Japanese patent application laid-open No. Sho 53—22883, i.e.

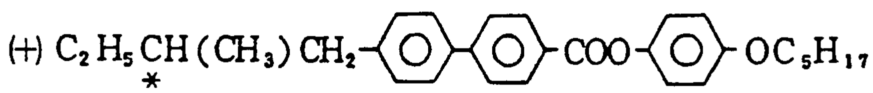

has a Ps value of only about 1, and even known compounds other than the above-mentioned have a Ps value of at most about 20, whereas some of the compounds of the present invention have a Ps value of 170 or more.

Further, the compounds of the formula (I) have superior compatibility with other compounds (such as compounds having $S_C$* phase or $S_H$* phase, compounds exhibiting cholesteric phase, etc.); hence the former compounds are blended with the latter to thereby make it possible to broaden the temperature range in which the $S_C$* phase is exhibited.

When a chiral smectic liquid crystal composition is constituted, this is possible by blending only a plurality of the compounds of the formula (I), or it is also possible to blend the compound(s) of the formula (I) with other achiral smectic liquid crystals to thereby prepare a liquid crystal composition exhibiting $S_C$* phase.

In addition, racemic substances corresponding to the compound of the formula (I) may be similarly prepared by replacing an optically active alcohol by the corresponding racemic type alcohol by the corresponding racemic type alcohol in the preparation of an optically active substance (I) shown later, and the resulting substances exhibit almost the same phase transition points as those of the compound of the formula (I). Racemic substances exhibit $S_C$ phase in place of $S_C$* phase, and by adding them to the optically active substance (I), it is possible to use them for adjusting the chiral smectic pitch.

Since the compound of the formula (I) also has an optically active carbon atom, it has a capability of inducing a twisted structure when it is added to nematic liquid crystals. Nematic liquid crystals having a twisted structure i.e. chiral nematic liquid crystals do not form the so-called reverse domain of the TN type display elements; hence it is possible to use the compound of the formula (I) as an agent for preventing the reverse domain from forming.

Further, among optically active 2-alkanols as the raw material, S(+)-2-octanol and R(−)-2-octanol are commercially available, but other optically active 2-alkanols are at present so expensive that they are unsuitable for use in a large quantity. Thus, the present inventors have used as raw material, products obtained by subjecting racemic substances to optical resolution according to the method described in a literature (R. H. Picard et al, J. Chem, Soc., *99,* 45 (1911)), and by using the resulting optically active 2-alkanols, it is possible to obtain various compounds of the formula (I) in which $R_2$ is varied. However, change in the phase transition point of liquid crystals due to the chain length of $R_2$ is slight; hence use as raw material, of optically active alkanols other than most readily available 2-octanols has no particular advantage.

Next, preparation of the compound of the formula (I) will be described.

First, a compound (Ia) of the formula (I) wherein Y represents —COO— may be suitably prepared through the following passageways:

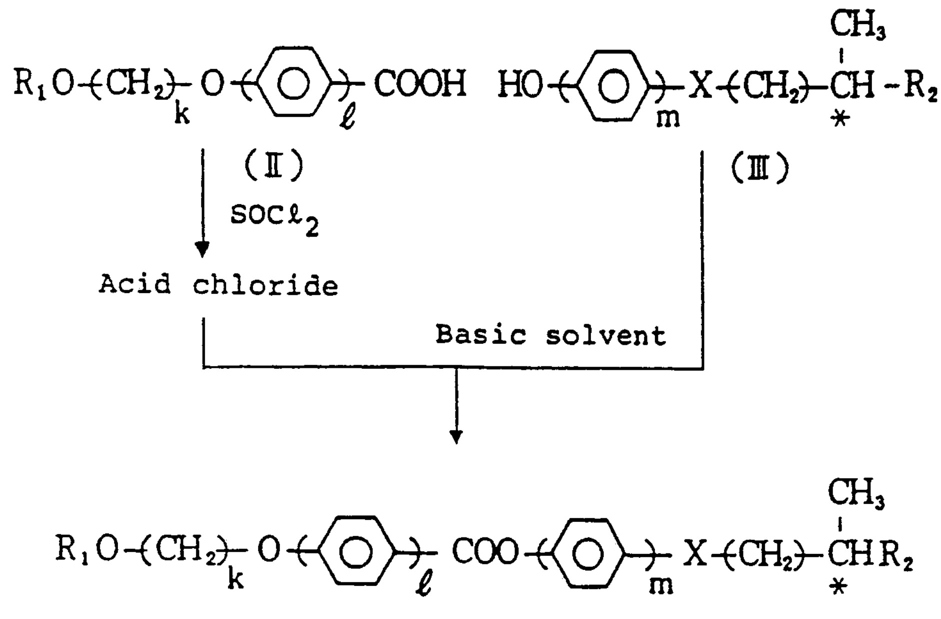


(I a)

Namely, an aromatic carboxylic acid (II) is firstly converted into an acid chloride by means of $SOCl_2$ or the like, followed by reacting the acid chloride with a p-(optically active alkyl)phenol, a p-(optically active alkyloxy)phenol, a p-hydroxybenzoic acid (optically active alkyl) ester, a 4'-(optically active alkyl)-4-hydroxyphenyl, a 4'-(optically active alkyloxy)-4-hydroxbiphenyl, a 4'-hydroxy-4-biphenylcarboxylic acid (optically active alkyl) ester or the like, each of the formula (III), corresponding to the final objective compound, in a basic solvent such as pyridine, to obtain a compound of the formula (Ia).

The aromatic carboxylic acid (II) as one of the raw materials may be suitably prepared through the following passageways:

Namely, a p-(β-alkoxyethoxy)-benzoic acid of the formula (II) wherein k = 2 and l = 1 may be prepared according to the method described in Japanese patent publication No. Sho 57—310/1982. A 4'-(β-alkoxyethoxy)-biphenyl-4-carboxylic acid of the formula (II) wherein k = 2 and l = 2 may be prepared by strongly alkaline or strongly acidic hydrolysis of a 4'-(β-alkoxyethoxy)-4-cynobiphenyl prepared according to a method described in Japanese patent application laid-open No. Sho 57—46952/1982. A compound of the formula (II) wherein k = 3 and l = 1 may be suitably prepared through the following route:

Methyl p-hydroxybenzoate is etherified using an alkylating agent such as a γ-alkoxy-propylbromide to obtain a methyl p-(γ-alkoxypropoxy)-benzoate, which is then subjected to alkaline hydrolysis to obtain a p-(γ-alkoxypropoxy)-benzoic acid. A compound of the formula (II) wherein k = 3 and l = 2 may be prepared by etherifying an ethyl 4'-hydroxy-biphenyl-4-carboxylate using a p-toluenesulfonic acid γ-alkoxypropyl ester to obtain an ethyl 4'-(γ-alkoxypropoxy)-biphenyl-4-carboxylate, which is then subjected to alkaline hydrolysis to obtain a 4'-(γ-alkoxypropoxy)-4-biphenylcarboxylic acid.

Further, a compound (Ib) of the formula (I) wherein Y represents —OCO— may be prepared through the following passageways:

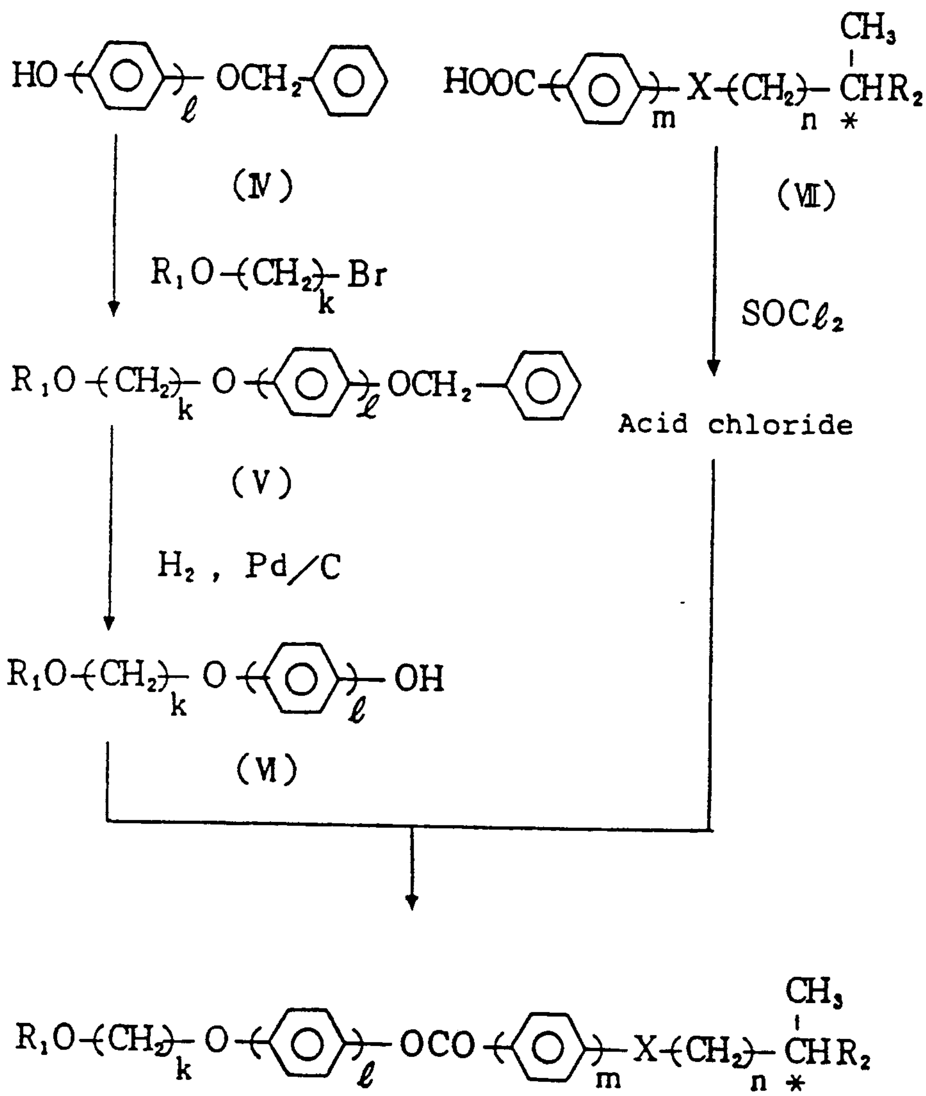


(Ib)

Namely, a compound (VI) prepared from a compound (IV) according to a conventional method is reacted with the acid chloride of an optically active carboxylic acid (VII) in a basic solvent represented by pyridine to obtain a compound of the formula (Ib). The optically active carboxylic acid (VII) may be prepared according to Decobert et al's method (Mol. Cryst. Liq. Cryst., *27,* p. 417 (1973)).

The ferroelectric liquid crystal ester compound of the present invention will be described in more detail by way of Examples.

Example 1

Preparation of optically active 4'-(β-hexyloxyethoxy)-4-biphenylcarboxylic acid p-(1-methyl-heptyloxy)phenyl ester (a compound of the formula (I) wherein k = 2, l = 2, m = 1, X = —O—, Y = —COO—, n = O, $R_1$—$C_6H_{13}$ and $R_2$=$C_6H_{13}$; sample No. 38).

Thionyl chloride (18.5 g, 0.133 mol) was added to 4'-(β-hexyloxyethoxy)-4-biphenylcarboxylic acid (20 g, 0.067 mol), followed by heating the mixture under reflux for 2 hours and thereafter distilling off excess thionyl chloride to obtain 4'-(β-hexyloxyethoxy)-4-biphenylcarboxylic chloride (20.3 g).

This 4'-(β-hexyloxyethoxy)-4-biphenylcarboxylic chloride (10 g, 0.031 mol) was added to and reacted with optically active p-(1-methyl-heptyloxy)phenol (8.5 g, 0.038 mol) dissolved in pyridine (30 ml), followed by heating the reaction mixture with stirring, allowing it to stand overnight, adding toluene (50 ml) and water (60 ml), agitating the mixture, washing the toluene layer with 6N-HCl, then with 2N-NaOH aqueous solution, further with water until the washing water became neutral, distilling off toluene and recrystallizing

the residue from ethanol to obtain the objective optically active 4'-(β-hydroxyethoxy)-4-biphenylcarboxylic acid p-(1-methyl-heptyloxy)phenyl ester (8.5 g). This product had the following phase transition points: C-$S_C$* point 85.9°C, $S_C$*-$S_A$ point 107.2°C and $S_A$-I point 110.6°C. Further the elemental analysis values accorded well with the calculated values.

| | Observed value (%) | Calculated value (%) (in terms of $C_{35}H_{46}O$) |
|---|---|---|
| C | 76.50 | 76.89 |
| H | 8.40 | 8.48 |

Preparations were carried out in the same manner as above except that the 4'-(β-hexyloxyethoxy)-4-biphenylcarboxylic chloride was replaced by 4'-(β-alkyloxyethoxy)-4-biphenylcarboxylic chlorides having other alkyl groups or p-(β-alkyloxyethoxy)benzoic chlorides and further, the optically active p-(1-methyl-alkyloxy)phenol was replaced by other phenols of the formula (III) corresponding to the final objective products, to obtain the final objective products. The phase transition points of the respective compounds and the Ps values of some of the compounds are shown in Table 1.

## Example 2

Preparation of optically active p-(γ-ethyloxypropoxy)benzoic acid 4'-(2-methylbutyloxy)-4-biphenylyl ester (a compound of the formula (I) wherein k = 3, l = 1, m = 2, X = —O—, Y = —COO—, n = 1, $R_1$—$C_2H_5$ and $R_2$=$C_2H_5$; sample No. 14).

Thionyl chloride (32 g, 0.268 mol) was added to p-(γ-ethyloxypropoxy)benzoic acid (30 g, 0.134 mol), followed by heating the mixture under reflux for 2 hours, thereafter distilling off excess thionyl chloride to obtain p-(γ-ethyloxypropoxy)benzoic chloride (29.5 g), thereafter adding this chloride (11 g, 0.045 mol) to a solution of optically active 4-(2-methylbutyloxy)-4'-hydroxybiphenyl (13 g, 0.046 mol) dissolved in pyridine (25 ml) to react these together, heating the reaction mixture with stirring, allowing it to stand overnight, adding toluene (50 ml) and water (60 ml), agitating the mixture, washing the toluene layer with 6N-HCl, then with 2N-NaOH aqueous solution, further with water until the washing water became neutral, distilling off toluene, and recrystallizing the residue from ethanol to obtain the objective optically active p-(γ-ethyloxypropoxy)benzoic acid 4'-(2-methylbutyloxy)-4-biphenyl ester (9.8 g). This product had the following phase transition points: C-Ch point 97.0°C, Ch-I point 151.7°C, and $S_C$*-Ch point 90.3°C. Further, the elemental analysis values accorded well with the calculated values as follows:

| | Observed value (%) | Calculated value (%) (in terms of $C_{29}H_{34}O_5$) |
|---|---|---|
| C | 75.00 | 75.30 |
| H | 7.30 | 7.40 |

Preparations were carried out in the same manner as above except that the p-(γ-ethyloxypropoxy)benzoic chloride used above was replaced by p-(γ-alkyloxypropoxy)benzoic chloride having other alkyl groups or 4'-(γ-alkyloxypropoxy)-4-biphenylcarboxylic chloride, and further the optically active 4'-(β-2-methylbutyloxy)-4-hydroxybiphenyl was replaced by phenols of the formula (III) corresponding to the final objective products, to obtain the final objective products. The phase transition points and Ps values of the respective compounds are shown in Table 1.

## Example 3

Preparation of optically active p-(4-methylhexyloxy)benzoic acid p'-(β-hexyloxyethyloxy)phenyl ester (a compound of the formula (I) wherein k = 2, l = 1, m = 1, n = 3, Y = —OCO—, X = —O—, $R_1$ = $C_6H_{13}$ and $R_2$ = $C_2H_5$; sample No. 26).

i) Preparation of p-(β-hexyloxyethyloxy)phenol

P-benzyloxyphenol (50 g, 0.250 mol) was dissolved in ethanol (300 ml), followed by adding KOH (15.4 g, 0.275 mol), thereafter adding β-hexyloxyethylenebromide (62.7 g, 0.300 mol), heating the mixture under reflux for 12 hours, adding water (400 ml) and toluene (200 ml) after completion of the reaction, washing the organic layer with 2N-NaOH aqueous solution, then with water until the washing water became neutral, distilling off the solvent and recrystallizing the residue from ethanol to obtain p-(β-hexyloxyethyloxy)phenyl benzyl ether (48.7 g), dissolving this compound (48.7 g, 0.148 mol) in ethanol and hydrogenating it with a catalyst of Pd (5%)-containing carbon (5 g) to obtain the objective p-(β-hexyloxyéthyloxy)phenol (38.8 g).

ii) Preparation of optically active p-(4-methylhexyloxy)benzoic chloride

To a solution of 4-methylhexanol (170 g, 1.460 mol) prepared according to a known method (Mol. Cryst. Lig. Cryst., *27*, p. 417 (1974)) dissolved in dry pyridine (560 ml) was dropwise, under dry ice cooling

and with stirring, added a solution of p-toluenesulfonic chloride (274 g, 1.437 mol) dissolved in toluene (400 ml). After completion of the dropwise addition, the temperature was slowly returned to room temperature, followed by keeping the mixture at 40°C for one hour, allowing it to stand overnight, adding water and tolene after the reaction, washing the organic layer with 6N-HCl, then with 2N-NaOH aqueous solution, further with water until the washing water became neutral, and distilling off the solvent to obtain an oily p-toluenesulfonic acid (4-methylhexyl) ester (305 g).

Methyl p-hydroxybenzoate (13.6 g, 0.090 mol) was dissolved in methanol (60 ml), followed by adding KOH (5 g, 0.090 mol), dissolving it therein on heating, adding to the solution, p-toluenesulfonic acid (4-methylhexyl) ester (20 g, 0.070 mol), heating the mixture under reflux for 10 hours, adding water and toluene after completion of the reaction, washing the organic layer with water, distilling off the solvent to obtain p-(4-methylhexyloxy)benzoic acid methyl ester (17.0 g), dissolving this compound (17.0 g) in ethanol (10 ml), adding to the solution, KOH (4.9 g, 0.140 mol) and water (25 ml), heating the mixture under reflux for 5 hours, adding 6N-HCl aqueous solution after completion of the reaction, to obtain an acidic solution, and recrystallizing crystals obtained from the solution, from heptane, to obtain optically active p-(4-methylhexyloxy)benzoic acid (6.5 g), adding thionyl chloride (10 ml) to the thus obtained optically active p-(4-methylhexyloxy)benzoic acid (5.0 g, 0.020 mol), heating the mixture under reflux for one hour, and thereafter distilling off excess thionyl chloride to obtain optically active p-(4-methylhexyloxy)benzoic chloride (5.0 g).

iii) Esterification

Optically active p-(β-hexyloxyethyloxy)phenol (5 g, 0.02 mol) obtained in the above i) was dissolved in pyridine (30 ml), and to the solution was added p-(4-methylhexyloxy)benzoic chloride (5.0 g, 0.02 mol) obtained in the above ii) to react the both, followed by heating the reaction mixture with stirring, allowing it to stand overnight, adding toluene (30 ml) and water (20 ml), agitating the mixture, washing the toluene layer with 6N-HCl, then with 2N-NaOH aqueous solution, further with water until the washing water became neutral, distilling off toluene and recrystallizing the residue from ethanol to obtain the objective optically active p-(4-methylhexyloxy)benzoic acid p'-(β-hexyloxyethyloxy)phenyl ester (4.8 g). This compound had a C-$S_C$* point of 21.8°C, a $S_C$*-Ch point of 22.3°C and a Ch-I point of 23.4°C.

Preparations were carried out in the same manner as above except that p-(4-methylhexyloxy)benzoic chloride used above was replaced by a p-(optically active alkyl)benzoic chloride or p-(optically active alkyloxy)benzoic chloride, and further, p-(β-hexyloxyethyloxy)phenol was replaced by a phenol of the formula (VI) corresponding to the final objective product, to obtain the final objective products. The respective phase transition points are shown in Table 1.

Example 4

(Use example 1)

A nematic liquid crystal composition consisting of

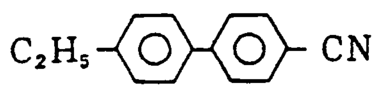 20 wt.%

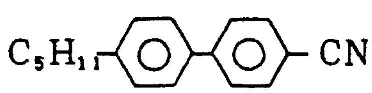 40 wt.%

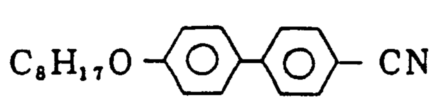 25 wt.% and

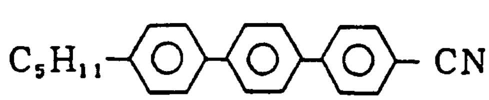 15 wt.%

was sealed in a cell provided with transparent electrodes having polyvinyl alcohol (PVA) as an aligning agent coated on the surfaces thereof and having rubbed the resulting surfaces to subject them to parallel aligning treatment, and having a distance between the electrodes, of 10 μm to prepare a TN type display cell, which was then observed under a polarizing microscope. As a result a reverse twist domain was observed to be formed.

To the above nematic liquid crystal composition was added a compound of the formula (I) of the present invention wherein $R_1 = C_2H_5$, k = 2, l = 1, m = 1, n = 1, X = —O—, Y = —COO— and $R_2 = C_2H_5$ (i.e. compound of sample No. 2) (1% by weight) and the resulting composition was observed in the same TN type cell as above. As a result the reverse twist domain was dissolved and a uniform nematic phase was observed.

Example 5

(Use example 2)

A liquid crystal composition consisting of the following components one of which was an optically active liquid crystal compound of sample No. 37 in the above Table 1 was prepared:

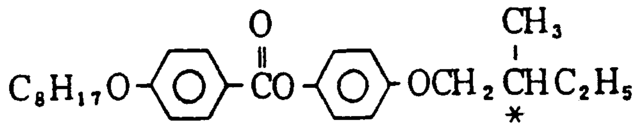

30 wt.%

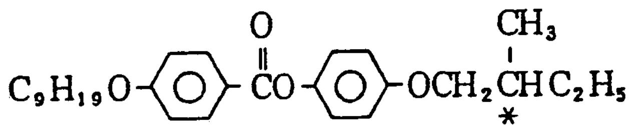

30 wt.%

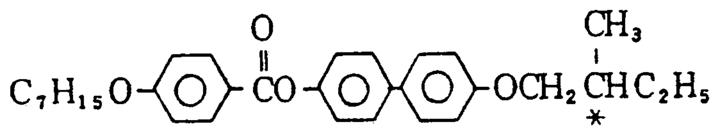

20 wt.% and

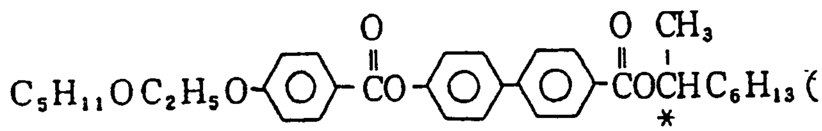

(No.37)

20 wt.%

The preparation of the composition was carried out by weighing the above 4 kinds of liquid crystal compounds, each in a definite quantity, and blending these in a sample bottle while dissolving them together on heating.

The thus obtained composition was sealed in a cell provided with transparent electrodes having PVA as an aligning agent coated on the surfaces thereof and having rubbed the resulting surfaces for parallel aligning treatment, and having a cell thickness of 2 µm, and the resulting liquid crystal element was provided between two sheets of crossed polarizers. When an electric field of 20 V was impressed, change in the intensity of a transmitted light was observed.

From the change in the intensity of the transmitted light at that time was sought the response time. As a result, a value as fast as about 0.7 msec at 25°C was exhibited.

In addition, with the above liquid crystal composition, the temperature change of its texture was observed by means of a polarizing microscope. As a result it was found that a ferroelectric liquid crystal was formed in the temperature range of 15°C to 50°C, and its spontaneous polarization value was 20 nC/cm$^2$ at 25°C and the tilt angle was 24°.

Example 6

(Use example 3)

The following liquid crystal composition containing the optically active compounds of sample Nos. 18, 30 and 14 in the above table 1 as constituting components was prepared in the same manner as in Example 5:

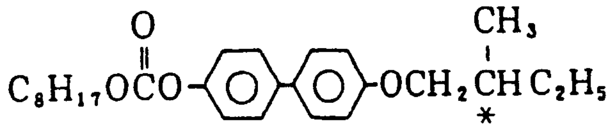

25 wt.%

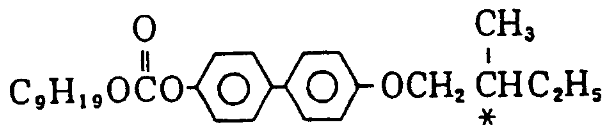

25 wt.%

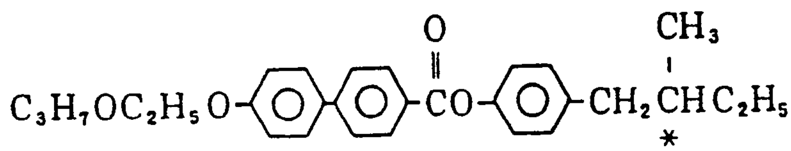

(No. 18)

10 wt.%

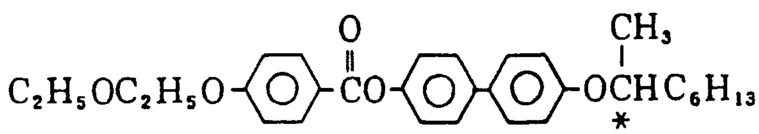

(No. 30) and

30 wt.%

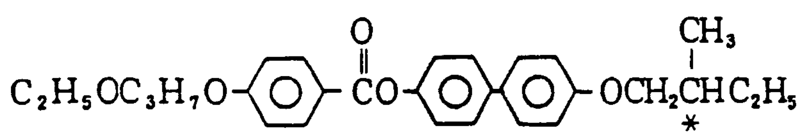

(No. 14)

10 wt.%

To this composition was added 3% by weight of an anthraquinone dyestuff, D—16 (tradename of product made by BDH Company) as a dichroic dyestuff to prepare the so-called guest-host type composition, which was then sealed in the same cell as in Example 5 (but the cell thickness: 10 μm), and one sheet of a polarizer was provided so that its polarization plane might be in parallel to the molecular axis. When an electric field of 40 V was impressed, change in the intensity of a transmitted light was observed.

From the change in the intensity of the transmitted light at that time was sought the response time. A value of about 3 msec at 25°C was exhibited.

In addition, with the above liquid crystal composition, the temperature change of its texture was observed by means of a polarizing microscope. As a result, it was found that a ferroelectric liquid crystal was formed in the temperature change of 10°C to 60°C, and its spontaneous polarization value was 12 nC/cm$^2$ at 25°C and its tilt angle was 35°.

**Claims**

1. A ferroelectric liquid crystal compound expressed by the formula

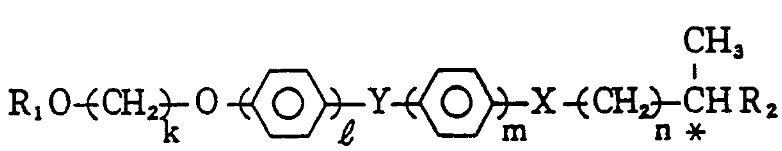

(I)

wherein $R_1$ represents an alkyl group of 2 to 6 carbon atoms; $R_2$, an alkyl group of 2 to 6 carbon atoms; X, a single bond, —O— or —COO—; Y, —COO— or —OCO—; k, 2 or 3; l and m, each 1 or 2; n, an integer of 0 to 5; and C having a symbol * attached thereto, unsymmetrical carbon atom, respectively.

2. A compound according to claim 1 wherein $R_2$ in the formula (I) represents $—C_2H_5$ and n therein represents an integer of 1 to 5.

3. A compound according to claim 1 wherein $R_2$ in the formula (I) represents $—C_6H_{13}$ and n represents zero.

4. A chiral smectic liquid crystal composition containing at least two components at least one of which is a ferroelectric liquid crystal compound expressed by the formula (I) as set forth in claim 1.

5. A light-switching element constituted by the use of a chiral liquid crystal composition containing at least two components at least one of which is a ferroelectric liquid crystal compound expressed by the formula (I) as set forth in claim 1.

**Patentansprüche**

1. Ferroelektrische Flüssigkristallverbindung der Formel

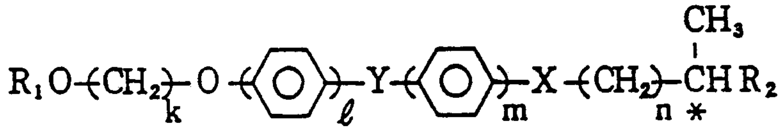

(I)

worin $R_1$ eine Alkylgruppe mit 2 bis 6 Kohlenstoffatomen; $R_2$ eine Alkylgruppe mit 2 bis 6 Kohlenstoffatomen; X eine Einfachbindung, —O— oder —COO—; Y den Rest —COO— oder —OCO—; k die Zahl 2 oder 3; l und m jeweils die Zah 1 oder 2; n eine ganze Zahl von 0 bis 5; und das mit dem *-Symbol gekennzeichnete C-Atom ein asymmetrisches Kohlenstoffatom bedeuten.

2. Verbindung nach Anspruch 1, worin $R_2$ in Formel (I) $—C_2H_5$ und n eine ganze Zahl von bis 5 bedeuten.

3. Verbindung nach Anspruch 1, worin $R_2$ in der Formel (I) $—C_6H_{13}$ und n Null bedeuten.

4. Chirale smektische Flüssigkristallzusammensetzung, enthaltend mindestens zwei Komponenten, von denen mindestens eine eine ferroelektrische Flüssigkristallverbindung der Formel (I) gemäß Anspruch 1 ist.

5. Lichtschaltelement, gebildet unter Verwendung einer chiralen smektischen Flüssigkristallzusammensetzung, die mindestens zwei Komponenten enthält, von denen mindestens eine eine ferroelektrisches Flüssigkristallverbindung der Formel (I) gemäß Anspruch 1 ist.

**Revendications**

1. Composé à cristaux liquides ferroélectrique répondant à la formule

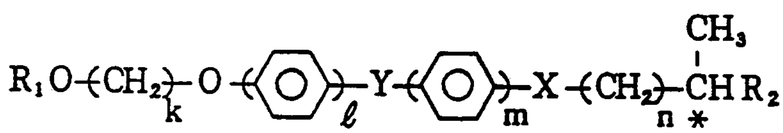

(I)

dans laquelle $R_1$ représente un groupe alkyle contenant de 2 à 6 atomes de carbone, $R_2$ représente un groupe alkyle contenant de 2 à 6 atomes de carbone, X représente une liaison simple, —O— ou —COO—, Y représente —COO— ou —OCO—, k vaut 2 ou 3, l et m valent chacun 1 ou 2, n est un nombre entier allant de 0 à 5 et C présentant le symbole * auquel il est relié représente un atome de carbone asymétrique.

2. Composé selon la revendication 1, caractérisé en ce que dans la formule (I) $R_2$ représente $—C_2H_5$ et n représente un nombre entier allant de 1 à 5.

3. Composé selon la revendication 1, caractérisé en ce que dans la formule (I) $R_2$ représente $—C_6H_{13}$ et n est égal à zéro.

4. Composition de cristaux liquides smectiques chiraux, contenant au moins deux composants dont au moins l'un d'eux est un composé à cristaux liquides ferroélectriques répondant à la formule (I) selon la revendication 1.

5. Elément de commande d'éclarage formé par la mise en oeuvre d'une composition de cristaux liquides smectiques chiraux contenant au moins deux composants dont au moins l'un d'eux est un composé à cristaux liquides ferroélectriques répondant à la formule (I) selon la revendication 1.